Europäisches Patentamt

European Patent Office

Office européen des brevets

(19)

(11) Veröffentlichungsnummer: **0 239 863**

**A1**

(12) # EUROPÄISCHE PATENTANMELDUNG

(21) Anmeldenummer: **87103853.5**

(22) Anmeldetag: **17.03.87**

(51) Int. Cl.⁴: **H02H 9/04**

(30) Priorität: **04.04.86 DE 3611411**

(43) Veröffentlichungstag der Anmeldung:
**07.10.87 Patentblatt 87/41**

(84) Benannte Vertragsstaaten:
**AT CH DE GB LI NL SE**

(71) Anmelder: **Siemens Aktiengesellschaft Berlin und München**
**Wittelsbacherplatz 2**
**D-8000 München 2(DE)**

(72) Erfinder: **Krummel, Peter, Ing.grad.**
**Bróubergstrasse 6**
**D-8221 St. Georgen(DE)**

(54) **Schaltungsanordnung zum Schutz eines Verbrauchers vor Überspannungen.**

(57) Schaltungsanordnung (S) zum Schutz eines Verbrauchers (4) vor Überspannung, mit einem Eingang (10), einem Ausgang (20), einem Vorwiderstand (2) und einem parallel zum Verbraucher (4) geschalteten Spannunsbegrenzer (3) mit einer Einschaltschwelle (UEIN) und einer Ausschaltschwelle (UAUS). Der Spannungsbegrenzer (3) enthält eine Serienschaltung mit einem Begrenzungsvaristor (31), der wegen seiner niedrigen Dauerbetriebsspannung (UDVAR) bei Nennbetrieb abgeschaltet ist, und einem Schalterelement (32), das den Begrenungsvaristor (31) zuschaltet. Zusätzlich kann der Spannungsbegrenzer (3) eine Ansteuerschaltung (33) mit einem Ansteuervaristor (331) aufweisen, die in Abhängigkeit von der Einschaltschwelle (UEIN) oder der Ausschaltschwelle (UAUS) des Spannungsbegrenzers (3) eine Ansteuerelektrode (323) des Schalterelements (32) ansteuert. Als Schalterelement (32) kann ein Thyristor (321) verwendet werden.

EP 0 239 863 A1

## Schaltungsanordnung zum Schutz eines Verbrauchers vor Überspannungen

Die Erfindung betrifft eine Schaltungsanordnung zum Schutz eines Verbrauchers vor Überspannungen gemäß Oberbegriff von Anspruch 1.

Bei einer bekannten Schaltungsanordnung dieser Art wird zwischen dem Eingang und dem Ausgang der Schaltungsanordnung ein Vorwiderstand verwendet. Parallel zum Ausgang, d.h. zum Verbraucher, der Schaltung ist ein Spannungsbegrenzer verbunden, der aus einer Serienschaltung eines ohmschen Widerstandes und eines Schalterelements besteht, das zwei antiparallel verbundene Thyristoren hat. Die Begrenzung der Spannung am Verbraucher auf einen maximal zulässigen Spitzenwert wird durch Hinzuschalten des ohmschen Widerstandes ab einer erreichten Spannung am Verbraucher, die der Einschaltschwelle des Spannungsbegrenzers entspricht, bewirkt. Diese Methode der Spannungsbegrenzung hat jedoch den entscheidenden Nachteil, daß der ohmsche Widerstand eine lineare Stromspannungskennlinie hat, und damit ein Zuwachs der Spannung am Eingang einem proportionalen Zuwachs der Spannung am Verbraucher bei eingeschaltetem Spannungsbegrenzer entspricht.

Bekannt sind auch Schaltungsanordnungen, bei denen nichtlineare Bauelemente, insbesondere Bauelemente mit einer exponentiellen Kennlinie parallel zum Verbraucher betrieben werden. Hierzu zählt auch ein spannungsabhängiger Wi derstand, ein Varistor, der durch eine maximale zulässige Dauerbetriebsspannung und eine sogenannte Varistorspannung, die am Knickpunkt der exponentiellen Kennlinie des Varistors liegt, gekennzeichnet ist. Ein Varistor ist im Dauerbetrieb nur einsetzbar, wenn die maximal zulässige Nennspannung am Verbraucher kleiner als die zulässige Dauerbetriebsspannung des Variators ist. Aus dieser Bedingung resultiert eine erhebliche Anwendungsbeschränkung von Varistoren.

Der Erfindung liegt daher die Aufgabe zugrunde, eine Schaltungsanordnung gemäß dem Oberbegriff von Anspruch 1 derart weiterzubilden, daß die lineare Kennlinie des Spannungsbegrenzers nach dem Oberbegriff des Anspruches 1 durch eine nichtlineare, exponentiell steil ansteigende Kennlinie ersetzt wird und daß durch eine sorgfältige Dimensionierung der Bauelemente des Spannungsbegrenzers ein zerstörungsfreier Einsatz der nichtlinearen Bauelemente gewährleistet ist.

Erfindungsgemäß wird diese Aufgabe durch einen Spannungsbegrenzer, der eine Serienschaltung mit einem Begrenzungsvaristor und einem Schalterelement hat, gelöst.

Der Begrenzungsvaristor hat eine ursprungssymmetrische Stromspannungskennlinie, ist also sowohl zur Begrenzung einer Gleichspannung am Verbraucher als auch zur Begrenzung einer Wechselspannung, d.h. von positiven und negativen Spannungen, geeignet.

Die Begrenzereigenschaft des Begrenzungsvaristors ist durch den exponentiell steilen Anstieg der Kennlinie oberhalb der Varistorspannung ausgebildet.

Vorteilhafterweise wird ein Begrenzungsvaristor im Spannungsbegrenzer verwendet, dessen Varistorspannung größer gleich dem Maximalwert der Nennspannung ist, die am Verbraucher anliegen kann. Zusätzlich kann die Varistorspannung kleiner gleich einem maximal zulässigen Spitzenwert, der Spannung am Verbraucher sein, für den die Bauelemente des zu schützenden Verbrauchers maximal ausgelegt sind.

Als Schalterelement kann ein elektronischer Schalter, der aus einem Halbleitermaterial besteht, oder ein elektromechanischer Schalter, z.B. ein Relais, eingesetzt werden. Zweckmäßigerweise zieht das Schalterelement einen möglichst geringen Sperrstrom im Sperrzustand. Im leitenden Zustand hat das Schalterelement einen geringen Durchlaßwiderstand , so daß der Spannungsabfall am Schalterelement im Vergleich zum Spannungsabfall am Begrenzungsvaristor vernachlässigbar ist. Vorteilhafterweise werden diese Eigenschaften von einem Thyristor erfüllt, der durch einen Haltestrom, bei dessen Unterschreitung der Thyristor in den Sperrzustand zurückkippt, und durch die Nullkippspannung bei deren Überschreiten der Thyristor selbst zündet, im positiven Spannungsbereich gekennzeichnet ist. Im negativen Spannungsbereich verhält sich der Thyristor wie eine Zenerdiode und wird deshalb zweckmäßigerweise bei der Begrenzung einer Gleichspannung, die auch eine pulsierende Gleichspannung sein kann, verwendet.

Der Thyristor kann auch als Schalterelement verwendet werden, wenn am Eingang der Schaltungsanordnung eine Wechselspannung anliegt, am Verbraucher jedoch nur eine Gleichspannung gefordert ist. Hierzu wird die anliegende Wechselspannung durch eine Gleichrichterschaltung, die der Schaltungsanordnung vorgeschaltet ist, in eine Gleichspannung umgewandelt.

Zur Begrenzung von Wechselspannungen am Verbraucher werden zweckmäßigerweise bidirektionelle Schalterelemente eingesetzt. Es könnten z.B. zwei Thyristoren in einer antiparallelen Verschaltung verwendet werden, vorteilhafterweise wird jedoch für die bidirektionale Begrenzung einer Spannung am Verbraucher ein Triac verwendet. Der Triac hat eine ursprungssymmetrische Kennlinie und ist deshalb zum Schalten von Wechselspannungen geeignet.

Zur Ansteuerung des eingesetzten Schalterelements kann der Spannungsbegrenzer zusätzlich eine Ansteuerschaltung aufweisen, die die Aufgabe hat, dann das Schalterelement zu schließen, wenn die Spannung am Verbraucher die Einschaltschwelle des Spannungsbegrenzers betragsmäßig überschreitet. Hierzu hat die Ansteuerschaltung eine Kennlinie mit einem Schwellenwert, der entweder gleich der Einschaltschwelle des Spannungsbegrenzers ist oder zumindest in einem funktionellen Zusammenhang zur Einschaltschwelle des Spannungsbegrenzers steht. Die Einschaltschwelle des Spannungsbegrenzers ist zweckmäßigerweise kleiner gleich dem maximalen Spitzenwert der Verbraucherspannung. Da die Kennlinie des Begrenzungsvaristors jedoch nicht eine ideale, unendlich große Steilheit besitzt, wird die Einschaltschwelle kleiner als der maximale Spitzenwert der Verbraucherspannung gewählt, so daß auf der Kennlinie noch ein gewisser Toleranzbereich bis zum Spitzenwert durchlaufen werden kann. Nach unten hin wird der Einstellbereich für die Einschaltschwelle des Spannungsbegrenzers durch den Maximalwert der Nennspannung am Verbraucher bestimmt. Vorteilhafterweise wird als Einstellbereich für die Einschaltschwelle des Spannungsbegrenzers jedoch der Bereich zwischen der Varistorspannung und dem maximal zulässigen Spitzenwert der Verbraucherspannung gewählt.

Zum Einschalten des Schalterelements kann in der Ansteuerschaltung z.B. eine Zenerdiode mit Schutzwiderstand parallel zum Verbraucher verbunden werden. Aber auch ein Diac mit Fußwiderstand oder eine Triggerdiode parallel zum Verbraucher verbunden, können zur Ansteuerung des Schalterelements eingesetzt werden. Vorteilhafterweise wird jedoch ein Ansteuervaristor, der in Serie mit einem Widerstand verbunden ist, parallel zum Verbraucher verbunden.

Die Ansteuerschaltung des Spannungsbegrenzers kann weiterhin die Aufgabe haben, das Schalterelement zu öffnen, so daß der Begrenzungsvaristor abgeschaltet wird. Hierzu hat die Ansteuerschaltung einen weiteren Schwellenwert, der der Ausschaltschwelle des Spannungsbegrenzers entspricht oder dieser zugeordnet ist. Zur Realisierung der Ausschaltschwelle können in der Ansteuerschaltung die gleichen Bauelemente bzw. Schaltungen verwendet werden, wie sie obenstehend bei der Einschaltschwelle angegeben worden sind. Jedoch werden die Bauelemente auf die Ausschaltschwelle des Spannungsbegrenzers hin in ihrer Dimensionierung ausgewählt. Vorteilhafterweise kann zur Unterscheidung von Einschaltschwelle und Ausschaltschwelle eine Logikschaltung mit der Aufgabe, ansteigende und abfallende Flanken der Spannung am Verbraucher voneinander zu unterscheiden, in der Ansteuerschaltung verwendet werden. Dadurch könnte man die Einschaltschwelle und die Ausschaltschwelle des Spannungsbegrenzers unabhängig voneinander festlegen.

Eine Ansteuerschaltung, die sowohl das Einschalten als auch das Ausschalten des Schalterelements bewirkt, kann bei der Verwendung eines Schalterelements mit zwei Steuereingängen z.B. einer Thyristortetrode mit zwei Ansteuergates oder eines GTO-Thyristors (Gate-Turn-Off-Thyristor) aber auch bei einem Transistor von Vorteil sein.

Wird eine Thyristors, eine Triacs oder ein anderes thyristorähnliches Bauelement als Schalterelement verwendet, kann vorteilhafterweise ausgenutzt werden, daß diese Bauelemente einen sogenannten Haltestrom haben, bei dessen Unterschreitung die Bauelemente in den Sperrzustand zurückkippen.

Zweckmäßigerweise wird der Thyristor und der Begrenzungsvaristor dimensionierungsmäßig derart selektiert und aufeinander abgestimmt, daß beim Unterschreiten der Ausschaltschwelle des Spannungsbegrenzers durch die Verbraucherspannung ein Ausschaltstrom durch den Begrenzungsvaristor fließt, der kleiner als der besagte Haltestrom des Thyristors ist. Dabei ist zweckmäßigerweise darauf zu achten, daß die Ausschaltschwelle des Spannungsbegrenzers größer gleich dem Maximalwert der Nennspannung am Verbraucher ist.

Bei der Begrenzung einer Wechselspannung am Verbraucher kann in der Ansteuerschaltung zur Feststellung der Ausschaltschwelle im positiven wie auch im negativen Spannungsbereich ein Bauelement mit unsymmetrischer Kennlinie verwendet werden, wie z.B. eine Zenerdiode. Zweckmäßigerweise wird dann die Ansteuerschaltung des Spannungsbegenzers in einer Gleichrichterbrückenschaltung betrieben, so daß nur Spannungen einer Polarität am nichtlinearen Bauelement, wie z.B. der Zenerdiode, anliegen.

Bei Einsatz eines Thyristors bzw. eines thyristorähnlichen Halbleiterbauelements, wie z.B. einer Vierschichtdiode oder eines Triacs als Schalterelement des Spannungsbegrenzers kann vorteilhafterweise auf die Verwendung einer Ansteuerschaltung für das Schalterelement verzichtet werden, wenn die Nullkippspannung des Thyristors der Einschaltschwelle des Spannungsbegrenzers entspricht. Der Ausschaltschwelle wird dann zweckmäßigerweise der Haltetrom des Thyristors zugeordnet.

Weitere vorteilhafte Ausgestaltungen der Erfindung sind in den Unteransprüchen gekennzeichnet.

Zwei Ausführungsbeispiele der Erfindung werden in den nachfolgenden Figuren näher erläutert. Es zeigen:

FIG 1 eine Schaltungsanordnung mit einem Thyristor als Schalterelement und einem Ansteuervaristor in der Ansteuerschaltung,

FIG 2 eine Varistorkennlinie mit eingetragenen Gleichstromarbeitsgeraden und den Spannungswerten, die für die Dimensionierung der Schaltungsanordnung ausschlaggebend sind,

FIG 3 eine zweite Schaltungsanordnung mit einem Triac als Schalterelement und einer Zenerdiode in einer Gleichrichterbrückenschaltung als Ansteuerschaltung.

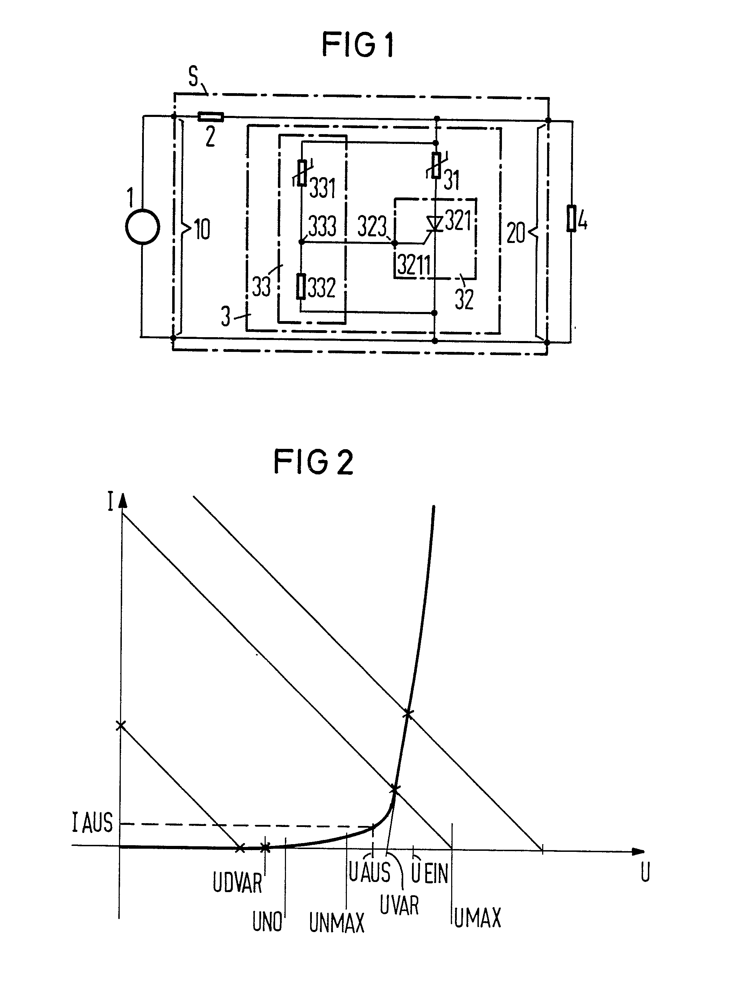

Am Eingang 10 der Schaltungsanordnung S nach FIG 1 liegt eine Spannungsquelle 1, die eine Gleichspannung abgibt. Der Gleichspannung können Überspannungen überlagert sein, die sich z.B. durch Spannungsspitzen äußern.

Am Ausgang 20 der Schaltungsanordnung S ist ein Verbraucher 4 parallel verbunden, der vor Überspannungen geschützt wird.

Zwischen Eingang 10 und Ausgang 20 der Schaltungsanordnung S ist ein Vorwiderstand 2 verbunden, der die ohmschen Verluste einer Entstörfilterdrossel und parasitäre ohmsche Verluste der Schaltungsanordnung, wie z.B. die ohmschen Verluste der Leitungen, zusammenfaßt.

Parallel zum Verbraucher 4 ist der Spannungsbegrenzer 3 der Schaltungsanordnung S verbunden, der aus einer Serien schaltung mit einem Begrenzungsvaristor 31 und einem Schalterelement 32 und einer Ansteuerschaltung 33 besteht, die ebenfalls parallel zum Verbraucher 4 liegt.

Der Begrenzungsvaristor 31 hat eine Kennlinie mit einer Varistorspannung UVAR und einer Dauerbetriebsspannung UDVAR, die unterhalb der Varistorspannung UVAR liegt. Die Varistorspannung des Begrenzungsvaristors 31 liegt über dem Maximalwert UNMAX der Nennspannung am Verbraucher 4 (vgl. FIG 2). Die Dauerbetriebsspannung UDVAR des Begrenzungsvaristors 31 liegt unterhalb des Minimalwerts UNO der Nennspannung am Verbraucher 4.

Als Schalterelement 32 ist ein Thyristor 321 mit einem Gate 3211 zur Zündung des Thyristors 321 verwendet. Der Thyristor 321 hat einen Haltestrom bei dessen Unterschreitung der Thyristor 321 in den Sperrzustand zurückkippt.

Die Ansteuerschaltung besteht aus einem Ansteuervaristor 331 und einem Ansteuerwiderstand 332, die in einer Serienschaltung parallel zum Verbraucher verbunden sind. Die Mittenklemme 333 zwischen dem Ansteuervaristor 331 und dem Ansteuerwiderstand 332 ist mit der Ansteuerelektrode 323 des Schalterelements 32, hier mit dem Gate 3211 des Thyristors 321, verbunden.

Der Ansteuervaristor 331 hat eine Varistorspannung UAVAR, die in etwa gleich der Einschaltschwelle UEIN des Spannungsbegrenzers 3 der Schaltungsanordnung S ist. Die Varistorspannung UAVAR des Ansteuervaristors 331 liegt höher als die Varistorspannung UVAR des Begrenzungsvaristors 31 und ist kleiner gleich dem maximal zulässigen Spitzenwert UMAX der Verbraucherspannung am Verbraucher 4.

Überschreitet die Spannung am Verbraucher 4 die Einschaltschwelle UEIN des Spannungsbegrenzers 3, fließt durch den Ansteuervaristor 331 ein Strom auf das Gate 3211 des Thyristors 321, der ausreicht, den Thyristor 321 zu zünden. Damit wird der Begrenzungsvaristor 31 eingeschaltet und begrenzt die Spannung am Verbraucher 4 auf einen Wert, der im Idealfall bei unendlich steiler Kennlinie des Begrenzungsvaristors 31 der Varistorspannung UVAR entspricht, jedoch wegen der endlichen Steilheit der Kennlinie geringfügig über der Varistorspannung UVAR liegt. Unterschreitet der Wert der Störspannung am Verbraucher 4 die Ausschaltschwelle UAUS des Spannungsbegrenzers 3, die zwischen dem Maximalwert UNMAX und der Einschaltschwelle UEIN liegt, fließt durch den Begrenzungsvaristor 31 ein Ausschaltstrom IAUS gemäß der Kennlinie des Begrenzungsvaristors 31, der kleiner als der Haltestrom des Thyristors 321 ist, so daß der Thyristor 321 in den Sperrzustand zurückkippt. Damit ist der Begrenzungsvaristor 31 ausgeschaltet.

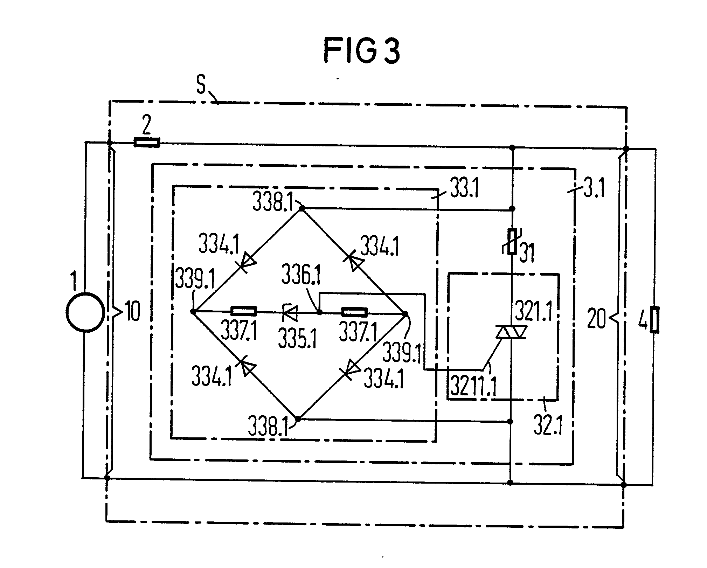

FIG 3 zeigt ein zweites Ausführungsbeispiel der Schaltungsanordnung S. Bei dieser Schaltung weist der Spannungsbegrenzer 3.1 in Serie mit dem Begrenzungsvaristor ein bidirektionales Schalterelement 32.1 auf, das ein Triac 321.1 ist. Der Triac 321.1 hat eine ursprungssymmetrische Kennlinie, damit ist gewährleistet, daß am Ausgang der Schaltungsanordnung S eine Wechselspannung begrenzt werden kann.

Die Ansteuerschaltung 33.1 des Spannungsbegrenzers 3.1 weist eine Gleichrichterbrückenschaltung mit den Gleichrichterdioden 334.1 auf, deren Eingangstor 338.1 parallel zum Verbraucher 4 liegt und deren Ausgangstor 339.1 an einer Serienschaltung mit zwei Schutzwiderständen 337.1 und einer in Sperrichtung gepolten Zenerdiode 335.1 liegt. Die Abgriffklemme 336.1 ist mit dem Gate 3211.1 des Triacs 321.1 zur Ansteuerung verbunden.

Die Einschaltschwelle UEIN des Spannungsbegrenzers 3.1 wird durch die Verbindung der Zenerdiode 335.1 mit einer Gleichrichterbrückenschaltung absolutbetragsmäßig der Zenerspannung der Zenerdiode 335.1 gleichgesetzt. Die Ausschaltschwelle UAUS des Spannungsbegrenzers 3.1 ist durch den Haltestrom des Triacs 321.1 festgelegt. Überschreitet die Spannung am Verbraucher 4 die Einschaltschwelle UEIN betragsmäßig in negativer oder positiver Richtung, fließt ein Strom durch die Zenerdiode 335.1, der durch die Schutzwiderstände 337.1 begrenzt wird. Von der Abgriffklemme 336.1 fließt dann auf das Gate des Triacs 3211.1 ein Strom, der ausreicht, den Triac 321.1 zu zünden. Der Begrenzungsvaristor 31 ist zugeschaltet und begrenzt die Spannung am Verbraucher 4 absolutbetragsmäßig auf einen Wert im Bereich der Varistorspannung UVAR. Der Begrenzungsvaristor 31 bleibt solange zugeschaltet, bis die Spannung am Verbraucher absolutbetragsmäßig die Ausschaltschwelle UAUS unterschreitet. Der Strom durch den Begrenzungsvaristor 31 ist dann absolutbetragsmäßig kleiner als der Haltestrom des Triacs 321.1, der dadurch in den Sperrzustand zurückkippt und den Begrenzungsvaristor 31 abschaltet.

Bezugszeichenliste

1 = Spannungsquelle
2 = Vorwiderstand
3; 3.1 = Spannungsbegrenzer
31 = Begrenzungsvaristor
32; 32.1 = Schalterelement
321 = Thyristor
3211 = Gate des Thyristors
32 1.1 = Triac
3211.1 = Gate des Triacs
323 = Ansteuerelektrode
33; 33.1 = Ansteuerschaltung
331 = Ansteuervaristor
332 = Ansteuerwiderstand
333 = Mittenklemme
334.1 = Gleichrichterdioden
335.1 = Zenerdiode
336.1 = Abgriffklemme
337.1 = Schutzwiderstand
338.1 = Eingangstor
339.1 = Ausgangstor
4 = Verbraucher
10 = Eingang
20 = Ausgang
Nennbetrieb
UNO = Minimalwert der Nennspannung
UNMAX = Maximalwert der Nennspannung
UMAX = zulässiger Spitzenwert der Verbraucherspannung
UEIN = Einschaltschwelle
UAUS = Ausschaltschwelle
UVAR = Varistorspannung des Begrenzungsvaristors
UDVAR = Dauerbetriebsspannung des Begrenzungsvaristors
UAVAR = Varistorspannung des Ansteuervaristors
IAUS = Ausschaltstromwert

**Ansprüche**

1. Schaltungsanordnung (S) zum Schutz eines Verbrauchers (4) vor einer Überspannung, die größer ist als ein maximal zulässiger Spitzenwert (UMAX)
-mit einem Eingang (10) zum Anschluß an eine Spannungsquelle (1),
-mit einem Ausgang (20) zum Anschluß des Verbrauchers (4),
--wobei am Verbraucher bei Nennbetrieb eine Nennspannung mit einem Spannungswert zwischen einem Minimalwert (UNO) und einem Maximalwert (UNMAX) liegt,
-mit einem Vorwiderstand (2) zwischen dem Eingang (10) und dem Ausgang (20),
-mit einem Spannungsbegrenzer (3),
--der einen Serienkreis mit einem Widerstand und einem Schalterelement (32) enthält und parallel zum Ausgang (20) liegt, und
--der eine Einschaltschwelle (UEIN) und eine Ausschaltschwelle (UAUS) hat,
**dadurch gekennzeichnet,**
-daß als Widerstand ein Begrenzungsvaristor (31) mit einer Varistorspannung (UVAR) und einer maximal zulässigen Dauerbetriebsspannung (UDVAR) verwendet ist,
-daß die Varistorspannung (UVAR) des Begrenzungsvaristors (31) größer/gleich dem Maximalwert (UNMAX) der Nennspannung am Verbraucher (4) ist und dieser Maximalwert (UNMAX) größer/gleich der maximal zulässigen Dauerbetriebsspannung (UDVAR) des Begrenzungsvaristors (31) ist,
-daß die Ausschaltschwelle (UAUS) des Spannungsbegrenzers (3) größer/gleich dem Maximalwert (UNMAX) der Nennspannung am Verbraucher 4 ist und
-daß die Einschaltschwelle (UEIN) des Spannungsbegrenzers (3) kleiner/gleich dem maximal zulässigen Spitzenwert (UMAX) der Verbraucherspannung ist.

2. Schaltungsanordnung nach Anspruch 1, **dadurch gekennzeichnet,** daß der Spannungsbegrenzer (3) eine Ansteuerschaltung (33) mit der Einschaltschwelle (UEIN) zur Ansteuerung des Schalterelements (32) aufweist.

3. Schaltungsanordnung nach Anspruch 2, **dadurch gekennzeichnet,** daß die Ansteuerschaltung (33) aus einer Serienschaltung mit einem Ansteuervaristor (331) mit der Varistorspannung (UAVAR) und einem Ansteuerwiderstand (332) besteht, und daß die Mittenklemme (333) zwischen dem Ansteuervaristor (331) und dem Ansteuerwiderstand (332) mit einer Ansteuerelektrode (323) des Schalterelements (32) verbunden ist.

4. Schaltungsanordnung nach Anspruch 3, **dadurch gekennzeichnet,** daß der Absolutbetrag der Varistorspannung (UAVAR) des Ansteuervaristors (332) größer ist als der Absolutbetrag der Varistorspannung (UVAR) des Begrenzungsvaristors (31).

5. Schaltungsanordnung nach einem der Ansprüche 1 bis 4, **dadurch gekennzeichnet,** daß ein Thyristor (321) mit einem Haltestrom als Schalterelement (32) verwendet ist, und daß die Ausschaltschwelle (UAUS) des Spannungsbegrenzers (3) einem Spannungsabfall am Begrenzungsvaristor (31) mit einem zugehörigen Ausschaltstrom (IAUS) entspricht, der kleiner/gleich dem Haltestrom des Thyristors (321) ist, bei dessen Unterschreitung der Thyristor (321) in den Sperrzustand zurückkippt.

6. Schaltungsanordnung nach einem der Ansprüche 1 bis 4, **dadurch gekennzeichnet,** daß bei einer Wechselspannung am Eingang (10) der Schaltungsanordnung (S) ein bidirektionales Schalterelement (32.1) im Spannungsbegrenzer (3.1) verwendet ist.

7. Schaltungsanordnung nach Anspruch 6, **dadurch gekennzeichnet,** daß der Spannungsbegrenzer (3.1) eine Gleichrichterbrückenschaltung mit einem Eingangstor (338.1) und einem Ausgangstor (339.1) aufweist, daß das Eingangstor (338.1) mit dem Ausgang (20) der Schaltungsanordnung (S) verbunden ist, und daß parallel zu dem Ausgangstor (339.1) die Ansteuerschaltung (33.1) des Spannungsbegrenzers (3.1) anliegt.

8. ·Schaltungsanordnung nach Anspruch 1, **dadurch gekennzeichnet,**
-daß ein Thyristor (321) als Schalterelement (32) mit einem Haltestrom und einer Nullkippspannung verwendet ist,
-daß die Einschaltschwelle (UEIN) des Spannungsbegrenzers (3) der Nullkippspannung des Thyristors (321) gleich ist,
-daß die Ausschaltschwelle (UAUS) des Spannungsbegrenzers (3) einem Spannungsabfall am Begrenzungsvaristor (31) mit einem zugehörigen Ausschaltstrom (IAUS) entspricht, der kleiner gleich dem Haltestrom (IH) des Thyristors (321) ist, bei dessen Unterschreitung der Thyristor (321) in den Sperrzustand zurückkippt.

# FIG 1

# FIG 2

FIG 3

**Europäisches Patentamt**

## EUROPÄISCHER RECHERCHENBERICHT

Nummer der Anmeldung

EP 87 10 3853

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-3 375 405 (FALLON et al.) <br><br> * Spalte 4, Zeile 57 - Spalte 5, Zeile 26; Figuren 1,2 * | 1,2,5-7 | H 02 H 9/04 |
| Y | | 3,4 | |
| | --- | | |
| Y | US-A-4 466 039 (MORAN et al.) <br> * Figur 1; Spalte 4, Zeile 64 - Spalte 5, Zeile 35 * | 3,4 | |
| | --- | | |
| X | US-A-3 246 206 (CHOWDHURI) <br> * Figur 3; Spalte 4, Zeile 46 - Spalte 5, Zeile 9 * | 1,8 | |
| | --- | | |
| A | EP-A-0 021 472 (BOEING) <br> * Figuren 1,2; Zusammenfassung * | 1-7 | RECHERCHIERTE SACHGEBIETE (Int. Cl.4) |
| | --- | | |
| A | US-A-4 288 830 (BOEING) <br> * Figur 2; Spalte 3, Zeile 65 - Spalte 4, Zeile 57 * | 1-7 | H 02 H |
| | ----- | | |

Der vorliegende Recherchenbericht wurde für alle Patentansprüche erstellt.

| Recherchenort <br> DEN HAAG | Abschlußdatum der Recherche <br> 01-07-1987 | Prüfer <br> KOLBE W.H. |
|---|---|---|